# EUROPÄISCHE PATENTANMELDUNG

(11) **EP 4 340 082 A1**
(43) Veröffentlichungstag der Anmeldung: **20.03.2024**
(21) Anmeldenummer: 22196218.6
(22) Anmeldetag: 16.09.2022
(51) Int. Cl.: H01M 10/04, B21C 37/08, B23D 25/04, B23K 31/02, H01M 50/103, H01M 50/15, H01M 50/342, H01M 50/545

(54) **BATTERIEZELLENGEHÄUSE UND VERFAHREN SOWIE ANLAGE ZUM HERSTELLEN VON BATTERIEZELLENGEHÄUSEN**

(71) Anmelder: DREISTERN GmbH & Co.KG, 79650 Schopfheim (DE)
(72) Erfinder: TRAUB, Tilman, 79395 Neuenburg (DE); GRÜLLICH, Christoph, 79650 Schopfheim (DE)
(74) Vertreter: LBP Lemcke, Brommer & Partner Patentanwälte mbB

(57) **Zusammenfassung**

Die Erfindung betrifft ein Verfahren zum Herstellen eines Batteriezellengehäuses, mit den Verfahrensschritten:
- Rollformen eines Metallbands oder Ausgangsprofils mittels einer Mehrzahl von Rollformwerkzeugen, die in Längsrichtung des Metallbands oder Ausgangsprofils hintereinander angeordnet sind, und durch die das Metallband oder Ausgangsprofil geführt und sukzessive durch kaltes Rollumformen zu einem rohrförmigen Hohlprofil mit vorzugsweise rechteckigem Querschnitt umgeformt wird,
- Fügen einer längs verlaufenden Stoßstelle des Hohlprofils mittels eines Fügeverfahrens, insbesondere Schweißen, Löten, Kleben oder Falzen, in einer Fügestation, die vom Hohlprofil durchlaufen wird, um durch Schließen der Stoßstelle aus dem Hohlprofil ein Rohr zu fertigen,
- Ablängen des Rohrs in Rohrstücke mit zwei offenen Rohrenden,
- Einsetzen eines Bodens oder eines Deckels in eines der offenen Rohrenden und Einsetzen einer galvanischen Zelle in das Rohrstück,
- Einsetzen eines Deckels oder eines Bodens in das andere offene Rohrende,
- Herstellen einer Verbindung von elektrischen Kontakten der galvanischen Zelle mit am Deckel und/oder am Boden angeordneten Polen und Fügen des Bodens und des Deckels, insbesondere durch Schweißen, Löten, Kleben oder Falzen an das Rohrstück.

Die Erfindung betrifft außerdem ein Batteriezellengehäuse, einen Batteriezellengehäuse-Grundkörper und eine Anlage zum Herstellen von Batteriezellengehäusen mittels des erfindungsgemäßen Verfahrens.

## Beschreibung

Die Erfindung betrifft ein Verfahren zum Herstellen eines Batteriezellengehäuses, ein Batteriezellengehäuse, das mit diesem Verfahren hergestellt wurde, sowie eine Anlage zur Herstellung von Batteriezellengehäusen.

Das vorrangige Anwendungsgebiet für die Erfindung ist ein Energiespeicher für Elektromotoren von batterieelektrisch angetriebenen Verkehrsmitteln, insbesondere Fahrzeugen, inklusive Hybridfahrzeugen, wobei mit dem Begriff "Energiespeicher" auch Pufferspeicher von sogenannten Mild-Hybridfahrzeugen oder Verkehrsmitteln mit Brennstoffzellenantrieben und dergleichen gemeint sein können. Ein weiteres mögliches Einsatzgebiet für derartige Zellen sind sonstige Stromspeicher, beispielsweise als Pufferspeicher in Verbindung mit Photovoltaikanlagen. Bei den angesprochenen Batteriezellen handelt es sich demnach um wiederaufladbare Akkumulator-Zellen zum elektrochemischen Speichern von elektrischer Energie.

Energiespeicher der vorliegenden Art bestehen üblicherweise aus einer Vielzahl von einzelnen Batteriezellen, die im Wesentlichen aus den Elektroden und den Elektrolyten einer galvanischen Zelle, einem diese umgebenden Batteriezellengehäuse und den Polen zum elektrischen Kontaktieren der galvanischen Zelle bestehen.

Im vorrangigen Anwendungsgebiet werden im Stand der Technik in der Regel Lithium-Ionen-Akkumulatoren als Batteriezellen verwendet. Hierbei wird eine quaderförmige Bauform der Batteriezellen und insbesondere von deren Batteriezellengehäuse bevorzugt, um möglichst viele Batteriezellen bei optimaler Raumausnutzung im Verkehrsmittel, insbesondere in einem Fahrzeug unterbringen zu können.

Aus Sicherheits- und Stabilitätsgründen ist das Batteriezellengehäuse üblicherweise aus Metall, aus Gewichtsgründen meist aus Aluminium gefertigt, und zwar herkömmlicherweise durch Umformen eines Metallblechs und Fügen eines Deckels auf eine becher- oder rohrförmige Vorform des Batteriezellengehäuses. Vor dem Fügen des Deckels kann die galvanische Zelle in das Batteriezellengehäuse integriert werden.

Eine räumlich dichte Packung einer Vielzahl von quaderförmigen - oder allgemein prismaförmigen oder zylindrischen - Batteriezellen setzt voraus, dass die Batteriezellengehäuse an ihren Kanten möglichst exakte Winkel, im Fall der Quaderform rechte Winkel aufweisen. Dies stellt das Fertigen von Batteriezellengehäusen durch Umformen von Metallblechen vor Herausforderungen: Üblicherweise wird durch Tiefziehen zunächst ein becherförmiges Gehäuseteil geformt, mit einem Boden und Seitenwänden, das nach Einsetzen der galvanischen Zelle nur noch mit einem Deckel verschlossen werden muss. Dieser wird üblicherweise angeschweißt.

Die durch einen Tiefziehprozess hergestellte becherförmige Grundform weist allerdings den großen Nachteil auf, dass kein rechtwinkliger Übergang zwischen dem Boden und den Seitenwänden hergestellt werden kann. Im Gegenteil: Durch den Tiefziehvorgang verbleibt an den Kanten der becherförmigen Grundform notwendigerweise ein Radius, der letztendlich eine möglichst dichte Packung der einzelnen Batteriezellen zu einem Energiespeicher der vorliegenden Art verhindert.

Es ist im Stand der Technik daher üblich, den Boden der tiefgezogenen, becherförmigen Grundform oberhalb des Übergangsradius abzutrennen und stattdessen ein flaches Blechstück als Boden des Batteriezellengehäuses anzuschweißen, um die gewünschten rechtwinkligen Übergänge zwischen dem Boden und den Seitenwänden des Batteriezellengehäuses herstellen zu können. Es liegt auf der Hand, dass hierdurch ungünstig viel Material entfernt und verschrottet wird. Hinzu kommt, dass beim Tiefziehprozess auch an der Oberkante der Grundform ein zum Niederhalten beim Tiefziehen benötigter Kragen übrig bleibt, der ebenfalls abgetrennt werden muss, um die gewünschte Form des Batteriezellengehäuses zu erhalten. Auch dieses Material wird also entfernt und verschrottet. Der Materialnutzungsgrad liegt so typischerweise im Bereich von lediglich 50% bis 70% des als Metallblech vorliegenden Ausgangsmaterials. Dies ist sowohl aus Kostengründen als auch unter Nachhaltigkeitsaspekten zu vermeiden.

Diese Probleme des Tiefziehprozesses bestehen in entsprechender Weise auch bei nicht-quaderförmigen Batteriezellengehäusen mit beispielsweise hexagonalem (für eine Wabenform) oder oktagonalem Querschnitt. Selbst bei zylindrischen Batteriezellengehäusen lassen sich entsprechende Probleme nicht vermeiden.

Darüber hinaus ist es für einen Tiefziehprozess bislang nur bedingt möglich, recyceltes Aluminium oder eine recycelte Aluminiumlegierung zu verwenden, da durch den Recyclingprozess eine Mischkristallhärtung des Aluminiums und eine entsprechende Versprödung des Materials erfolgt. Eine weitere Einschränkung der bisherigen Herstellungsroute ist die begrenzte Länge der einzelnen Batteriezellengehäuse, die sich aus den Limitationen des erreichbaren Ziehverhältnisses im Tiefziehprozess ergibt.

Ausgehend von diesem Stand der Technik liegt der Erfindung die Aufgabe zugrunde, den Materialnutzungsgrad beim Herstellen von Batteriezellengehäusen aus Metallblechen zu erhöhen und hierbei möglichst alle vorstehend beschriebenen Problemstellungen zu lösen.

Gelöst ist diese Aufgabe durch ein Verfahren mit den Merkmalen des Anspruchs 1, durch ein Batteriezellengehäuse mit den Merkmalen des Anspruchs 10 sowie durch eine Anlage zur Herstellung von Batteriezellengehäusen mit den Merkmalen des Anspruchs 12.

Bevorzugte Weiterbildungen des erfindungsgemäßen Verfahrens finden sich in den Ansprüchen 2 bis 9, während bevorzugte Ausgestaltungen der erfindungsgemäßen Anlage in den Ansprüchen 13 bis 15 niedergelegt sind.

Das erfindungsgemäße Verfahren zum Herstellen eines Batteriezellengehäuses enthält also folgende Verfahrensschritte:
- Rollformen eines Metallbands oder Ausgangsprofils mittels einer Mehrzahl von Rollformwerkzeugen in Umformstationen, die in Längsrichtung des Metallbands oder Ausgangsprofils hintereinander angeordnet sind, und durch die das Metallband oder Ausgangsprofil geführt und sukzessive durch kaltes Rollumformen zu einem rohrförmigen Hohlprofil mit vorzugsweise rechteckigem Querschnitt umgeformt wird,
- Fügen einer längs verlaufenden Stoßstelle des Hohlprofils mittels eines Fügeverfahrens, insbesondere Schweißen, Löten, Kleben oder Falzen, in einer Fügestation, die vom Hohlprofil durchlaufen wird, um durch Schließen der Stoßstelle aus dem Hohlprofil ein Rohr zu fertigen,
- Ablängen des Rohrs in Rohrstücke mit zwei offenen Rohrenden,
- Einsetzen eines Bodens oder eines Deckels in eines der offenen Rohrenden und Einsetzen einer galvanischen Zelle in das Rohrstück,
- Einsetzen eines Deckels oder eines Bodens in das andere offene Rohrende und Herstellen einer Verbindung von elektrischen Kontakten der galvanischen Zelle mit am Deckel und/oder am Boden angeordneten Polen,
- Fügen des Bodens und des Deckels, insbesondere durch Schweißen, Löten, Kleben oder Falzen an das Rohrstück.

Das erfindungsgemäße Batteriezellengehäuse und der Batteriezellengehäuse-Grundkörper werden dementsprechend in einem Rollumformverfahren gefertigt.

Die erfindungsgemäße Anlage zur Herstellung von Batteriezellengehäusen setzt das erfindungsgemäße Verfahren um und umfasst im Wesentlichen eine Profiliermaschine mit einer Mehrzahl von Rollformwerkzeugen, um ein Metallband oder Ausgangsprofil sukzessive durch kaltes Rollumformen zu einem Hohlprofil mit einer längs verlaufenden Stoßstelle umzuformen. In einer Fügestation wird die Stoßstelle des Hohlprofils geschlossen, um aus dem Hohlprofil ein Rohr zu fertigen, wonach dann in einer Trennstation Rohrstücke mit zwei offenen Rohrenden, insbesondere durch Sägen, Stanzen oder Abscheren abgelängt werden.

Der Kern der vorliegenden Erfindung besteht somit in der Verwendung einer Profiliermaschine bzw. eines Rollumformverfahrens, um den gewünschten rohrförmigen, d.h. zylindrischen oder prismaförmigen Batteriezellen-Grundkörper mit vorzugsweise rechteckigem Querschnitt herzustellen, an den dann nur noch flache Bleche als Boden und Deckel gefügt werden müssen. Es gibt nach dem Umformprozess, in dem das Ausgangsblech (oder ein Ausgangsprofil) in das zylindrische oder prismaförmige, insbesondere quaderförmige Hohlprofil zur Bildung des Batteriezellen-Grundkörpers umgeformt wird, keine Materialüberstände oder unerwünschten Teile wie der abgerundete Boden-Seitenwand-Übergang bei tiefgezogenen Batteriezellen-Grundkörpern, die von diesem abgetrennt werden müssen, um den Batteriezellen-Grundkörper weiter zum gewünschten Batteriezellengehäuse zu verarbeiten. Der im Stand der Technik unter Kosten- und Nachhaltigkeitsgesichtspunkten unerwünschte Materialausschuss entfällt somit.

Gleichzeitig ist das Rollumformen eines Metallbands oder Ausgangsprofils ein kontinuierliches Umformverfahren, das in der Lage ist, insbesondere aus einem quasi endlosen Metallband in kurzer Zeit eine große Anzahl von Batteriezellengehäuse-Grundkörpern zu fertigen. Es handelt sich mithin schon deswegen um ein kosteneffizientes Umformverfahren, wobei noch hinzukommt, dass beim Rollumformen auch recyceltes Aluminium oder eine recycelte Aluminiumlegierung verwendet werden kann, ohne Qualitätseinbußen beim fertigen Batteriezellengehäuse befürchten zu müssen.

Durch den kontinuierlichen Fertigungscharakter entfällt ferner die bisherige Limitation im Hinblick auf die Zellenlänge, da die Länge des Grundkörpers im Rollformprozess alleine von der Taktung des Trennprozesses abhängt.

Es ist im Rahmen des erfindungsgemäßen Verfahrens bevorzugt, gleich beim Umformen in den sukzessive hintereinander angeordneten Rollformwerkzeugen ein rohrförmiges Hohlprofil mit n-eckigem, insbesondere rechteckigem Querschnitt auszubilden. Es ist im Rahmen der vorliegenden Erfindung jedoch ebenso möglich, das rohrförmige Hohlprofil mit einem beliebigen, beispielsweise runden oder eiförmigen Querschnitt einzuformen, die Stoßstelle zu schließen und erst dann durch eine Kalibrierstation mit einer Anzahl von Kalibrierrollen das Rohr auf die gewünschte Querschnittsform zu kalibrieren.

Das Kalibrieren kann wahlweise auch vor dem Fügen der Stoßstelle und nach dem Rollumformen erfolgen, wobei wahlweise eine Kalibrierstation mit einem im Inneren des Hohlprofil-Querschnitts angeordneten Dorn, insbesondere ein Vierwalzen-Ziehapparat verwendet werden kann.

Wie bereits erwähnt, wird für das vorrangige Anwendungsgebiet der vorliegenden Erfindung vorzugsweise ein Metallband oder Ausgangsprofil aus Aluminium oder einer Aluminiumlegierung verwendet, insbesondere aus recyceltem Aluminium oder einer recycelten Aluminiumlegierung.

Weitere Vorteile ergeben sich beim erfindungsgemäßen Verfahren, wenn in das Metallband oder Ausgangsprofil, das in einer Profiliermaschine bzw. einem Rollumformverfahren umgeformt wird, eine Berstscheibe eingeformt wird, und zwar vorzugsweise vor dem Rollumformen, oder aber zwischen den Rollformwerkzeugen. Eine solche Berstscheibe dient im Batteriezellengehäuse als Sollbruchstelle für den Fall, dass im Inneren des Batteriezellengehäuses aufgrund einer Fehlfunktion der galvanischen Zelle ein Überdruck entsteht.

Das Einformen einer Berstscheibe noch vor dem endgültigen Rollumformen des Hohlprofils, das zu einem Rohr gefügt wird und/oder noch vor dem Kalibrieren des Hohlprofils oder Rohrs bietet den großen Vorteil, dass das fertig umgeformte und gefügte Rohr bzw. das kalibrierte und gefügte Rohr, das anschließend zu einzelnen Batteriezellengehäuse-Grundkörper abgelängt wird, vom Vorgang des Einformens einer Berstscheibe nicht mehr beeinträchtigt wird, d.h. das Einformen der Berstscheibe kann die Maßhaltigkeit des gewünschten Querschnitts des fertig gefügten Rohrs nicht beeinträchtigen. Daher ist es auch möglich, und im Rahmen der vorliegenden Erfindung bevorzugt, die Berstscheibe durch einen Prägevorgang zum Verringern der Materialdicke in das Material des Batteriezellengehäuses einzuformen. Dies ermöglicht, die notwendige Berstscheibe eines Batteriezellengehäuses sehr kostengünstig und wiederum nachhaltig zu fertigen, da das herkömmliche Entfernen von Material durch Ausstanzen oder Ausschneiden einer Berstscheibe und Fügen eines Berstscheiben-Blechs mit geringerer Dicke in das entstandene Fenster entfallen können.

Um zu verhindern, dass das beim Einprägen einer Berstscheibe verdrängte Material des Metallband oder Ausgangsprofils stört, kann es vorteilhaft sein, die Berstscheibe an der längs verlaufenden Stoßstelle des Hohlprofils anzuordnen, wofür an den beiden Rändern bzw. Bandkanten des Metallbands oder Ausgangsprofils jeweils ein Teil der Berstscheibe eingeprägt wird, und das Material, das hierbei über die Ränder des Metallbands bzw. Ausgangsprofils hinausgedrückt wird, in einer Kanten-Besäumstation zu entfernen, bevor die Ränder bzw. Bandkanten an der längs verlaufenden Stoßstelle des Hohlprofils aufeinanderstoßen. Nach dem Fügen der Stoßstelle addieren sich die beiden Prägestellen zur gewünschten Berstscheibe. In einer weiteren bevorzugten Ausführung kann sich die eingeprägte Berstscheibe jedoch auch in ausrechender Entfernung zu den Bandkanten und Beigeabschnitten befinden, sodass eine negative Beeinflussung des Umform- oder Fügeprozesses durch das verdrängte Material ausgeschlossen ist.

Alternativ ist es auch im Rahmen der vorliegenden Erfindung jedoch weiterhin möglich, einen Deckel oder einen Boden mit einer bereits darin integrierten Berstscheibe mit geringerer Materialdicke zu verwenden, mit denen das erfindungsgemäß hergestellte Rohr mit rechteckigem Querschnitt zum Batteriezellengehäuse komplettiert wird.

Vor oder während des Rollumformens können längs verlaufende Kerben in das Metallband oder Ausgangsprofil eingebracht werden, um das Rohr mit möglichst exakten, insbesondere rechten Winkeln in seinem Querschnitt fertigen zu können.

Um etwa im Batteriezellengehäuse gewünschte Öffnungen, beispielsweise für eine Berstscheibe, eine Kontaktierung, eine Inspektionsöffnung und dergleichen mehr einzubringen, kann das Metallband oder Ausgangsprofil vor dem Rollumformen oder zwischen den Rollformwerkzeugen eine Stanze durchlaufen, mit der die genannten Öffnungen im späteren Batteriezellengehäuse erzeugt werden.

Die erfindungsgemäße Anlage zur Herstellung von Batteriezellengehäusen mittels des erfindungsgemäßen Verfahrens umfasst eine Profiliermaschine mit einer Mehrzahl von Rollformwerkzeugen zum Rollumformen eines Metallbands oder Ausgangsprofils. Diese Rollformwerkzeuge sind in Längsrichtung des Metallbands oder Ausgangsprofils hintereinander in Umformstationen angeordnet, um das Metallband oder Ausgangsprofil hindurchzuführen und hierbei sukzessive durch kaltes Rollumformen zu einem Hohlprofil mit vorzugsweise rechteckigem (oder beliebigem) Querschnitt umzuformen. Die Anlage umfasst ferner eine Fügestation, die vom Hohlprofil durchlaufen wird, um eine längs verlaufende Stoßstelle des Hohlprofils mittels eines Fügeverfahrens, insbesondere Schweißen, Löten, Kleben oder Falzen zu fügen und aus dem Hohlprofil durch Schließen der Stoßstelle ein Rohr zu fertigen.

Insbesondere dann, wenn durch das Rollumformen ein Hohlprofil mit nicht bereits n-eckigem, insbesondere rechteckigem Querschnitt geformt wird, kann die Anlage außerdem eine Kalibrierstation mit einer Anzahl von Kalibrierrollen umfassen, die vor oder nach der Fügestation angeordnet ist und das Hohlprofil in den gewünschten Querschnitt umformt.

Die erfindungsgemäße Anlage umfasst schließlich eine Trennstation zum Ablängen des Rohrs in Rohrstücke mit zwei offenen Rohrenden, insbesondere durch Sägen, Stanzen oder Abscheren. Diese Trennstation kann wahlweise dazu ausgebildet sein, das Rohr in Rohrstücke abzulängen, die eine Länge aufweist, die einem Vielfachen, insbesondere einem ganzzahligen Vielfachen der Länge eines Batteriezellengehäuses entspricht. Es müssen also nicht unbedingt Rohrstücke gefertigt werden, die direkt als Batteriezellengehäuse-Grundkörper vorliegen und als solche zu Batteriezellengehäusen vervollständigt werden können; insbesondere wenn letzteres in einer Fabrikationsstätte vorgenommen wird, die nicht in unmittelbarer Nähe der Profiliermaschine lokalisiert ist, kann es aus Transport- und Handlingsgründen erwünscht sein, entsprechend längere Rohrstücke mit der erfindungsgemäßen Anlage zu fertigen, die dann später entsprechend abgelängt bzw. zugeschnitten werden.

Bevorzugt ist es im Rahmen der vorliegenden Erfindung, wenn die erfindungsgemäße Anlage außerdem eine Montagestation zum Einsetzen eines Bodens oder eines Deckels in eines der offenen Rohrenden und Einsetzen einer galvanischen Zelle in das Rohrstück, zum Einsetzen eines Deckels oder eines Bodes in das andere offene Rohrende, und zum Herstellen einer Verbindung von elektrischen Kontakten der galvanischen Zelle mit am Deckel und/oder am Boden angeordneten Polen sowie zum Fügen des Boden und des Deckels, insbesondere durch Schweißen, Löten, Kleben oder Falzen, an das Rohrstück dient. Auf diese Weise kann beispielsweise aus einem Metallband als Ausgangsprodukt am Ende der Anlage eine fertige Batteriezelle entstehen, wobei selbstverständlich hierfür noch eine galvanische Zelle und ihre Pole zugeführt werden müssen.

Insbesondere um eine Berstscheibe mit verringerter Materialdicke und/oder ein Lochbild in das Metallband oder Ausgangsprofil einzubringen, kann die erfindungsgemäße Anlage schließlich noch eine Stanz- oder Prägestation umfassen, die vor oder innerhalb der Profiliermaschine angeordnet ist.

Anhand der beigefügten Zeichnungen wird im Folgenden ein Ausführungsbeispiel für eine erfindungsgemäße ausgestaltete Anlage und je ein Ausführungsbeispiel für ein erfindungsgemäßes Batteriezellengehäuse und einen Batteriezellen-Grundkörper beschrieben, wobei auch ein Ausführungsbeispiel für das erfindungsgemäße Verfahren erläutert wird. Es zeigen:
- Figur 1a: eine schematische Darstellung einer erfindungsgemäß ausgebildeten Anlage zur Herstellung von Batteriezellengehäusen;
- Figur 1b: ein Blockdiagramm der Anlage aus Figur 1a;
- Figur 2: eine schematische Darstellung einer Umformstation aus der Anlage von Figur 1a;
- Figur 3: eine schematische Darstellung des Rollumformprozesses von einem Metallband zu einem Rohr nach einem ersten Ausführungsbeispiel;
- Figur 4: eine schematische Darstellung des Rollumformprozesses von einem Metallband zu einem Rohr nach einem zweiten Ausführungsbeispiel;
- Figur 5a: eine schematische isometrische Darstellung eines erfindungsgemäß ausgestalteten Batteriezellen-Grundkörpers;
- Figur 5b: eine schematische isometrische Darstellung eines erfindungsgemäß ausgestalteten Batteriezellen-Grundkörpers;
- Figur 6: eine schematische isometrische Darstellung eines erfindungsgemäß ausgestalteten Batteriezellengehäuses.

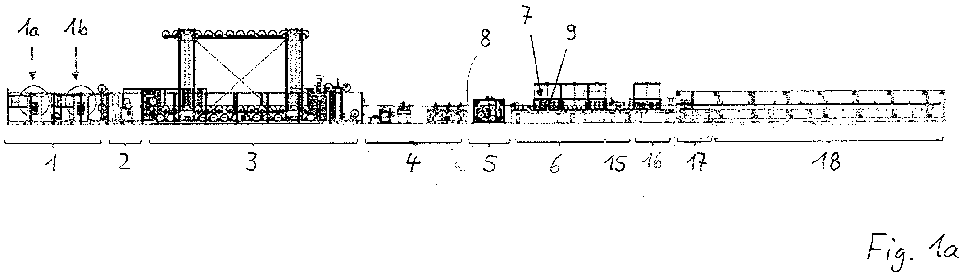

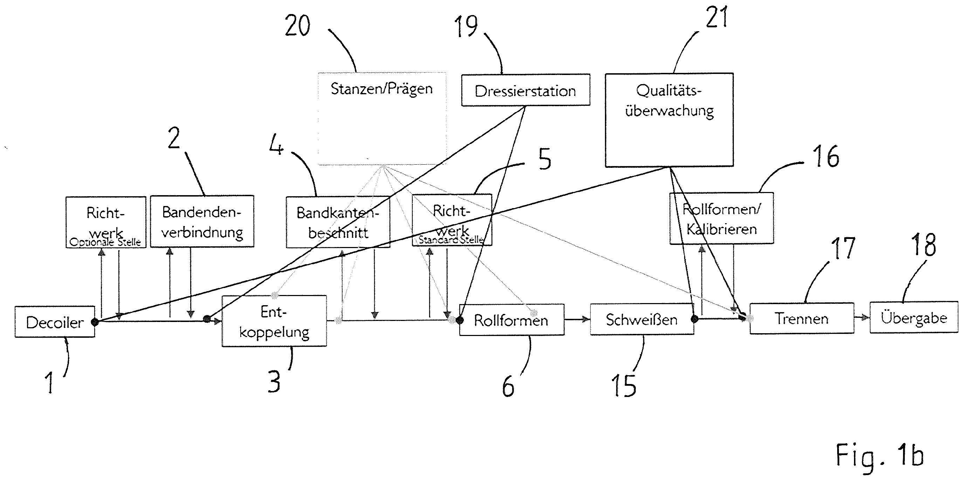

Die Figuren 1a und 1b zeigen in einer schematischen seitlichen Darstellung (Figur 1a) bzw. in einer Blockdiagramm-Darstellung (Figur 1b) eine erfindungsgemäß ausgestaltete Anlage zur Herstellung von Batteriezellengehäusen, wobei außer den für die Erfindung notwendigen Anlagenteilen auch weitere Anlagenteile enthalten sind, die ihrerseits bevorzugte Weiterbildungen der erfindungsgemäßen Anlage kennzeichnen.

Die Produktionsrichtung ist in den Figuren 1a und 1b von links nach rechts orientiert. Eine Haspel 1 bzw. ein Decoiler, von denen in Figur 1a gleich zwei, eine erste Haspel 1a und eine zweite Haspel 1b, dargestellt sind, dient dazu, ein Metallband 8, das üblicherweise als Spule aufgewickelt bzw. als sogenannter Coil angeliefert wird, für die Weiterverarbeitung kontrolliert abzuwickeln. Eine sich daran anschließende Bandenden-Verbindungsstation 2 dient dazu, das Metallband 8 von der zweiten Haspel 1b mit dem Ende eines vollständig von der ersten Haspel 1a abgewickelten Metallbands 8 zu verbinden, um einen quasi endlosen Prozess zu gewährleisten. Die erste Haspel 1a wird danach mit einem neuen Coil befüllt, der dann zu gegebener Zeit in der Bandenden-Verbindungsstation 2 an das vollständig abgewickelte Metallband der zweiten Haspel 1b angeschweißt werden kann.

Das abgewickelte Metallband 8 durchläuft sodann ein Entkopplungsmodul 3, das als Bandspeicher dient und im einfachsten Fall eine hängende Bandschlaufe sein kann. Hier sollen die im zeitlichen Verlauf unterschiedlich variierenden Arbeitsgeschwindigkeiten der vor und nach dem Entkopplungsmodul 3 angeordneten Anlagenteile über einen Pufferspeicher ausgeglichen werden.

Wie Figur 1b zeigt, kann der Haspel 1 optional ein Richtwerk (in Figur 1a nicht dargestellt) nachgeordnet werden, um Spannungen im abgewickelten Metallband zu entfernen bzw. zu homogenisieren, so dass das Metallband völlig eben und ohne innere Spannungen, die ein unerwünschtes Verformen des Materials beim Weiterverarbeiten bewirken, in die nachfolgenden Anlagenteile eingebracht werden kann.

Da Metallbänder, insbesondere wenn sie ein Richtwerk durchlaufen haben, mitunter nicht vollständig parallele Bandkanten besitzen, ist im vorliegenden Ausführungsbeispiel eine optionale Bandkanten-Besäumstation 4 vorgesehen, in der die Bandkanten beim Durchlaufen des Metallbands beschnitten werden, so dass das Metallband mit maßhaltiger Breite und exakter Parallelität der Bandkanten weiterverarbeitet werden kann.

Nach Durchlaufen eines Richtwerks 5, in dem das Metallband 8 spannungsfrei gemacht wird, schließt sich die eigentliche Profiliermaschine 6 an, in der das Metallband in einer Mehrzahl von Rollformwerkzeugen sukzessive zu einem rohrförmigen Hohlprofil umgeformt wird. Die Rollformwerkzeuge sind in Längsrichtung des Metallbands hintereinander in Umformstationen 7 angeordnet, um das Metallband hindurchzuführen und hierbei sukzessive durch kaltes Rollumformen zu einem Hohlprofil 23 umzuformen.

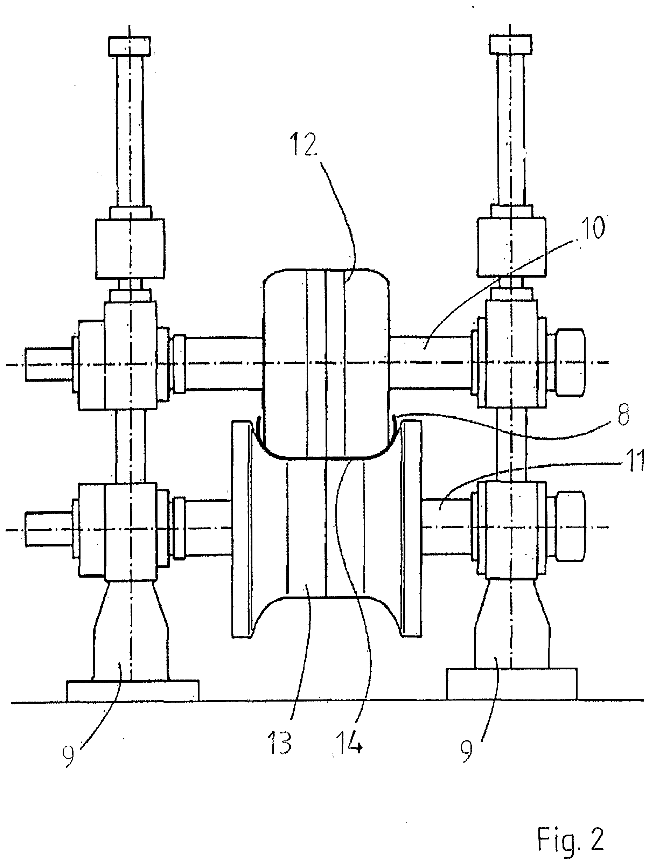

Eine solche Umformstation 7 zeigt Figur 2 in einer schematischen Darstellung in Bewegungsrichtung des Metallbands 8. Diese Umformstation 7 besteht aus einem Gestell 9, auf dem eine obere Antriebswelle 10 und eine untere Antriebswelle 11 vertikal verstellbar gelagert sind. Die obere Antriebswelle 10 trägt ein oberes Rollformwerkzeug 12, während auf der unteren Antriebswelle 11 ein unteres Rollformwerkzeug 13 sitzt, wobei die Rollformwerkzeuge 12, 13 zwischen sich einen Walzspalt 14 bilden, in welchem das Metallband 8 kalt umgeformt wird. Die Verstellbarkeit der oberen und unteren Antriebswellen 10, 11 dient dazu, die oberen und unteren Rollformwerkzeuge 12, 13 bedarfsweise gegen andere Rollformwerkzeuge austauschen zu können.

Eine Profiliermaschine 6 in einer Anlage gemäß den Figuren 1a und 1b umfasst typischerweise 15 bis 30 Umformstationen 7, um das Metallband 8 sukzessive zu einem Hohlprofil 23 umzuformen. Dieses gelangt, anschließend an die Profiliermaschine 6, in eine Fügestation 15, vorliegend eine Schweißstation, und wird dort durch Fügen einer längs verlaufenden Stoßstelle 24 des Hohlprofils 23, an der die beiden Bandkanten 33 des umgeformten Metallbands 8 aneinanderstoßen, zu einem Rohr 22 verschweißt. Dies kann, wie an sich bekannt, durch WIG-Schweißen, oder alternativ durch HF- oder Laserschweißen erfolgen.

In der in den Figuren 1a und 1b dargestellten Anlage durchläuft das in der Fügestation 15 fertiggestellte Rohr 22 eine Kalibrierstation 16, in der das Rohr, wiederum mittels Rollumformens, in die gewünschte Form des Batteriezellengehäuse-Grundkörpers gebracht bzw. diese Form kalibriert wird. Danach läuft das Rohr 22 in eine Trennstation 17, die vorliegend aus einer mitlaufenden Säge besteht, jedoch auch eine Stanze oder Schere sein kann, die allesamt mitlaufend oder auch stationär ausgebildet sein können. In letzterem Fall wird der Transport des Metallbands 8 bzw. des Rohrs 22 für die Dauer des Trennprozesses gestoppt.

In einer Übergabestation 18 werden die fertig eingeformten und abgelängten Batteriezellengehäuse-Grundkörper 25 an nachfolgende Anlagenteile übergeben oder gegebenenfalls auch zum Versand fertiggemacht, um die Batteriezellengehäuse-Grundkörper 25 an einem anderen Ort zu einem Batteriezellengehäuse 27 zu vervollständigen, indem ein Boden 28, ein Deckel 29 und eine galvanische Zelle mit entsprechenden Polen 30 eingebracht werden.

Wie Figur 1b zeigt, können optional noch Dressierstationen 19 vorgesehen sein, die das Metallband 8 nach dem Abwickeln von der Haspel 1 bzw. vor dem Rollumformen in der Profiliermaschine 6 dressieren, d.h. mit einem Walzgrad von typischerweise 0,5% bis 2,5% kaltwalzen, um eine gute Planheit und eine gewünschte Rauheit der Oberfläche für das Rollumformen zu erreichen sowie eine möglichst geringe Blechdickentoleranz im fertigen Produkt sicherzustellen.

Ebenso geht aus Figur 1b hervor, dass optional Stanz- oder Prägestationen 20 in die Anlage integriert werden können, sowie auch Qualitätsüberwachungsmodule 21, um die Bauteilqualität zu kontrollieren bzw. zu dokumentieren, wie z.B. eine Querschnittsvermessung, die typischerweise vor der Trennstation 17 erfolgen sollte, eine Überwachung der Qualität der Schweißnaht, beispielsweise mittels Bildabgleichs oder mittels Wirbelstrommessungen, oder eine Charakterisierung des einlaufenden Metallbands 8 hinsichtlich dessen Oberfläche, Dicke, Breite und etwaiger Rückstände oder Verschmutzungen auf der Oberfläche.

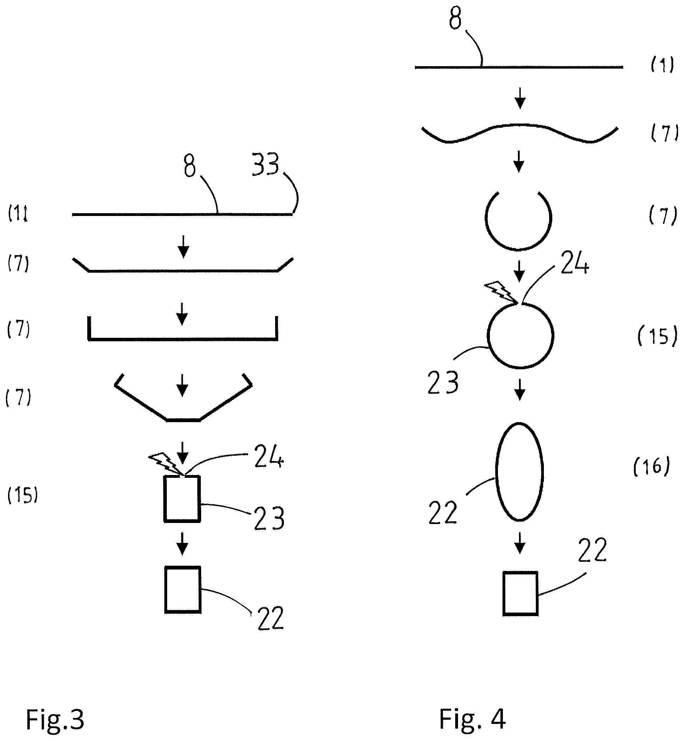

Die Figuren 3 und 4 zeigen jeweils schematisch im Querschnitt das Metallband 8 in unterschiedlichen aufeinanderfolgenden Verfahrensschritten beim Umformen zum gewünschten Rohr 22 mit gewünscht exaktem rechteckigen Querschnitt:
In einer ersten Verfahrensweise, die in Figur 3 dargestellt ist, wird das Metallband 8 nach dem Abwickeln von der Haspel 1 in mehreren Umformstationen 7 sukzessive in ein Hohlprofil 23 mit bereits rechteckigem Querschnitt umgeformt, wodurch die Bandkanten 33 des Metallbands 8 an einer längs verlaufenden Stoßstelle 24 des Hohlprofils 23 einander gegenüberliegen und aufeinander treffen. Diese Stoßstelle 24 wird in der Fügestation 15, die vom Hohlprofil 23 durchlaufen wird, verschweißt, um durch Schließen der Stoßstelle 24 aus dem Hohlprofil 23 schließlich das erwünschte Rohr 22 mit rechteckigem Querschnitt zu bilden.

Figur 4 zeigt eine alternative Verfahrensweise: Hier wird das von der Haspel 1 abgewickelte Metallband 8 wiederum in einer Mehrzahl von Umformstationen 7 zu einem rohrförmigen Hohlprofil 23 mit einer längs verlaufenden Stoßstelle 24 umgeformt, wobei allerdings das rohrförmige Hohlprofil 23 noch keinen rechteckigen Querschnitt aufweist. Dieser wird erst nach dem Verschweißen in der Fügestation 15 in der Kalibrierstation 16 am fertigen Rohr 22 durch Kalibrieren hergestellt, so dass auch in dieser alternativen Verfahrensweise vor der Trennstation 17 ein fertiges Rohr 22 mit dem gewünschten, sehr exakt rechteckigen Querschnitt vorliegt.

Nach dem Ablängen des Rohrs 22 in der Trennstation 17 liegen in beiden Verfahrensweisen Batteriezellengehäuse-Grundkörper 25 als Zwischenergebnis zum Weiterverarbeiten zu einem Batteriezellengehäuse 27 vor.

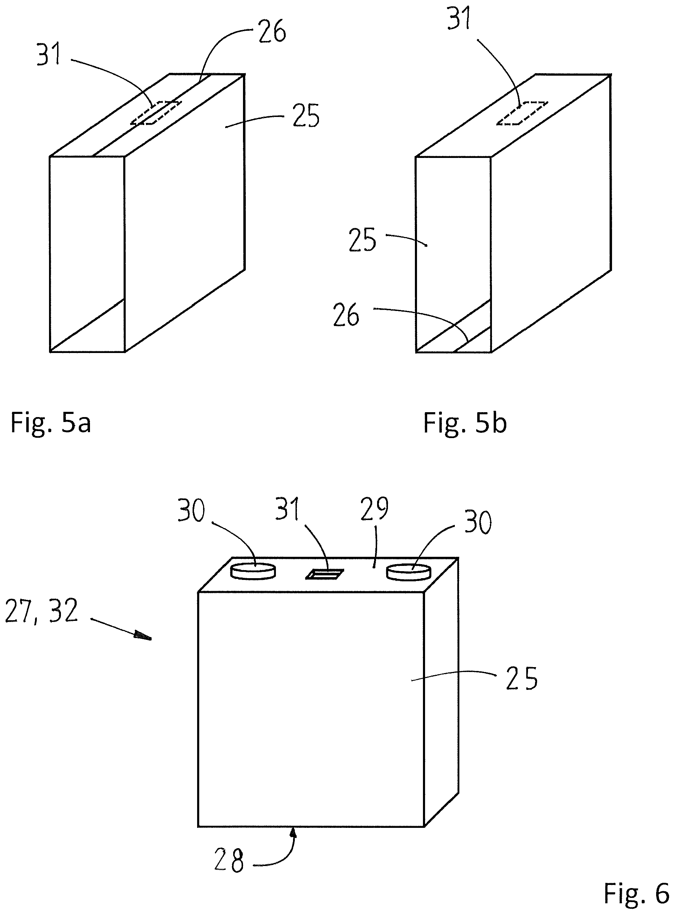

Die Figuren 5a und 5b zeigen in schematischer isometrischer Darstellung einen solchen Batteriezellengehäuse-Grundkörper 25 mit einer Schweißnaht 26 an einer Schmalseite seines rechteckigen Querschnitts. Dieser Batteriezellengehäuse-Grundkörper 25 weist typischerweise eine Höhe von 150mm bis 300mm, eine Breite von 50mm bis 100mm und eine variable Länge auf und besteht vorzugsweise aus einer Aluminiumlegierung mit einer Blechdicke < 1mm. Er wurde in einer Anlage gemäß den Figuren 1a und 1b mit einer Vorschubgeschwindigkeit des Metallbands 8 von > 10 m/min, vorzugsweise von > 20 m/min, weiter bevorzugt von bis zu 50 m/min hergestellt, d.h. es können auf einer solchen erfindungsgemäß ausgestalteten Anlage in kürzester Zeit eine Vielzahl von Batteriezellengehäuse-Grundkörpern 25 hergestellt werden.

Der Batteriezellengehäuse-Grundkörper 25 kann schließlich, wie Figur 6 zeigt, zu einem fertigen Batteriezellengehäuse 27 vervollständigt werden, indem ein Boden 28 und ein Deckel 29 in die offenen Rohrenden des Batteriezellengehäuse-Grundkörpers 25 gefügt, eine (nicht sichtbare) galvanische Zelle eingeschoben und mit Polen 30 kontaktiert werden. Der Deckel 29 ist im vorliegenden Ausführungsbeispiel mit einer Berstscheibe 31 versehen, die entweder herkömmlich durch Ausstanzen eines Fensters und Anfügen eines Blechs mit geringerer Dicke an den Deckel 29 hergestellt wird, oder aber durch Einprägen der Berstscheibe 31, die hierdurch gegenüber dem Material des restlichen Deckels 29 eine geringere Materialdicke erhält.

Je nach Dimension der Batteriezelle 32 ist es üblich, die Berstscheibe 31 an einer Schmalseite des Batteriezellengehäuse-Grundkörpers 25 anzubringen. Hierfür kann in der erfindungsgemäßen Anlage eine Stanz- oder Prägestation 20 verwendet werden, um eine entsprechende Berstscheibe 31 vorzugsweise einzuprägen. Figur 5b zeigt einen Batteriezellengehäuse-Grundkörper 25 mit einer eingeprägten Berstscheibe 31 in einer Schmalseite.

Wie in Figur 5a mit punktierten Linien angedeutet ist, kann eine Berstscheibe 31 auch jeweils zur Hälfte an den beiden Bandkanten des Metallbands 8 eingestanzt oder eingeprägt werden, so dass die Berstscheibe 31 dann an der Schweißnaht 26 angeordnet ist.

Mit der vorliegenden Erfindung, deren beispielhafte Realisierung in den Figuren dargestellt und erläutert ist, können also Batteriezellengehäuse, insbesondere zur Verwendung in Energiespeichern für Elektromotoren von batterieelektrisch angetriebenen Verkehrsmitteln, mit geringstem Verschnitt, höchster Maßhaltigkeit für eine möglichst dichte Packung der Batteriezellen im Energiespeicher und gegebenenfalls unter Verwendung von recycelten Metallen und Legierungen in kürzester Zeit mit geringen Produktionskosten hergestellt werden.

## Patentansprüche

1. Verfahren zum Herstellen eines Batteriezellengehäuses (27), mit den Verfahrensschritten:
- Rollformen eines Metallbands (8) oder Ausgangsprofils mittels einer Mehrzahl von Rollformwerkzeugen (12, 13), die in Längsrichtung des Metallbands (8) oder Ausgangsprofils hintereinander angeordnet sind, und durch die das Metallband (8) oder Ausgangsprofil geführt und sukzessive durch kaltes Rollumformen zu einem rohrförmigen Hohlprofil (23) mit vorzugsweise rechteckigem Querschnitt umgeformt wird,
- Fügen einer längs verlaufenden Stoßstelle (24) des Hohlprofils (23) mittels eines Fügeverfahrens, insbesondere Schweißen, Löten, Kleben oder Falzen, in einer Fügestation (15), die vom Hohlprofil (23) durchlaufen wird, um durch Schließen der Stoßstelle (24) aus dem Hohlprofil (23) ein Rohr (22) zu fertigen,
- Ablängen des Rohrs (22) in Rohrstücke mit zwei offenen Rohrenden,
- Einsetzen eines Bodens (28) oder eines Deckels (29) in eines der offenen Rohrenden und Einsetzen einer galvanischen Zelle in das Rohrstück,
- Einsetzen eines Deckels (29) oder eines Bodens (28) in das andere offene Rohrende und Herstellen einer Verbindung von elektrischen Kontakten der galvanischen Zelle mit am Deckel (29) und/oder am Boden (28) angeordneten Polen (30),
- Fügen des Bodens (28) und des Deckels (29), insbesondere durch Schweißen, Löten, Kleben oder Falzen an das Rohrstück.

2. Verfahren nach Anspruch 1,
wobei das Hohlprofil (23) nach dem Rollumformen oder das Rohr (22) nach dem Fügen der längs verlaufenden Stoßstelle (24) durch eine Kalibrierstation (16) mit einer Anzahl von Kalibrierrollen geführt und dort auf die gewünschte Querschnittsform des Rohrs (22) kalibriert wird.

3. Verfahren nach Anspruch 2,
wobei eine Kalibrierstation (16) mit einem im Inneren des Hohlprofil-Querschnitts angeordneten Dorn, insbesondere mit einem Vierwalzen-Ziehapparat verwendet wird.

4. Verfahren nach mindestens einem der Ansprüche 1 bis 3,
wobei ein Metallband (8) oder Ausgansprofil aus Aluminium oder einer Aluminiumlegierung verwendet wird.

5. Verfahren nach Anspruch 4,
wobei ein Metallband (8) oder Ausgansprofil aus recyceltem Aluminium oder einer recycelten Aluminiumlegierung verwendet wird.

6. Verfahren nach mindestens einem der Ansprüche 1 bis 5,
wobei ein Deckel (29) oder ein Boden (28) mit einer darin integrierten Berstscheibe (31) mit geringerer Materialdicke verwendet wird.

7. Verfahren nach mindestens einem der Ansprüche 1 bis 5,
wobei vorzugsweise vor dem Rollumformen eine Berstscheibe (31) in das Metallband (8) oder Ausgangsprofil eingeformt wird, insbesondere durch einen Prägevorgang zum Verringern der Materialdicke.

8. Verfahren nach mindestens einem der Ansprüche 1 bis 7,
wobei vor oder während des Rollumformens Kerben in das Metallband (8) oder Ausgangsprofil eingebracht werden, um das Rohr (22) mit möglichst exakten rechten Winkeln in seinem Querschnitt zu fertigen.

9. Verfahren nach mindestens einem der Ansprüche 1 bis 8,
wobei etwaige im Batteriezellengehäuse (27) gewünschte Öffnungen vor dem Rollumformen oder zwischen den Rollformwerkzeugen mittels einer Stanze in das Metallband (8) oder Ausgangsprofil eingebracht werden, insbesondere mindestens eine Berstscheiben-Öffnung, vorzugsweise an einer oder beiden Bandkanten (33) des Metallbands (8) oder Ausgangsprofils.

10. Batteriezellengehäuse (27), hergestellt mit einem Verfahren nach mindestens einem der Ansprüche 1 bis 9.

11. Batteriezellengehäuse-Grundkörper (25), bestehend aus einem Rohrstück aus Aluminium oder einer Aluminiumlegierung, insbesondere aus recyceltem Aluminium oder einer recycelten Aluminiumlegierung, mit zwei offenen Rohrenden, hergestellt durch Rollformen eines Metallbands (8) oder Ausgangsprofils mittels einer Mehrzahl von Rollformwerkzeugen (12, 13), die in Längsrichtung des Metallbands (8) oder Ausgangsprofils hintereinander angeordnet sind, und durch die das Metallband (8) oder Ausgangsprofil geführt und sukzessive durch kaltes Rollumformen zu einem Hohlprofil (23) mit vorzugsweise rechteckigem Querschnitt umgeformt wird, Fügen einer längs verlaufenden Stoßstelle (24) des Hohlprofils (23) mittels eines Fügeverfahrens, insbesondere Schweißen, Löten, Kleben oder Falzen, in einer Fügestation (15), die vom Hohlprofil (23) durchlaufen wird, um durch Schließen der Stoßstelle (24) aus dem Hohlprofil (23) ein Rohr (22) zu fertigen, und Ablängen des Rohrs (22) in Rohrstücke.

12. Anlage zur Herstellung von Batteriezellengehäusen (27) in einem Verfahren nach mindestens einem der Ansprüche 1 bis 9, umfassend eine Profiliermaschine mit einer Mehrzahl von Rollformwerkzeugen (12, 13) zum Rollumformen eines Metallbands (8) oder Ausgangsprofils, welche Rollformwerkzeuge (12, 13) in Längsrichtung des Metallbands (8) oder Ausgangsprofils hintereinander in Umformstationen (7) angeordnet sind, um das Metallband (8) oder Ausgangsprofil hindurchzuführen und hierbei sukzessive durch kaltes Rollumformen zu einem Hohlprofil (23) mit vorzugsweise rechteckigem Querschnitt umzuformen, mit einer Fügestation (15), die vom Hohlprofil (23) durchlaufen wird, um eine längs verlaufende Stoßstelle (24) des Hohlprofils (23) mittels eines Fügeverfahrens, insbesondere Schweißen, Löten, Kleben oder Falzen zu fügen und durch Schließen der Stoßstelle (24) aus dem Hohlprofil (23) ein Rohr (22) zu fertigen, und mit einer Trennstation (17) zum Ablängen des Rohrs (22) in Rohrstücke mit zwei offenen Rohrenden, insbesondere durch Sägen, Stanzen oder Abscheren.

13. Anlage nach Anspruch 12,
wobei die Trennstation (17) dazu ausgebildet ist, das Rohr (22) in Rohrstücke abzulängen, die eine Länge aufweisen, die einem Vielfachen, insbesondere einem ganzzahligen Vielfachen der Länge eines Batteriezellengehäuses (27) entspricht.

14. Anlage nach einem der Ansprüche 12 oder 13,
ferner umfassend eine Montagestation zum Einsetzen eines Bodens (28) oder eines Deckels (29) in eines der offenen Rohrenden und Einsetzen einer galvanischen Zelle in das Rohrstück, zum Einsetzen eines Deckels (29) oder eines Bodens (28) in das andere offene Rohrende, und zum Herstellen einer Verbindung der Elektroden der galvanischen Zelle mit am Deckel (29) und/oder am Boden (28) angeordneten Polen (30) sowie zum Fügen des Bodens (28) und des Deckels (29), insbesondere durch Schweißen, Löten, Kleben oder Falzen, an das Rohrstück.

15. Anlage nach mindestens einem der Ansprüche 12 bis 14,
ferner umfassend eine Stanz- oder Prägestation (20) zum Einbringen einer Berstscheibe (31) mit verringerter Materialdicke und/oder eines Lochbilds in das Metallband (8) oder Ausgangsprofil, wobei die Stanz- oder Prägestation (20) vor oder innerhalb der Profiliermaschine angeordnet ist.
